# EUROPÄISCHE PATENTSCHRIFT

(11) **EP 1 436 355 B1**
(45) Veröffentlichungstag und Bekanntmachung des Hinweises auf die Patenterteilung: **14.12.2005**
(21) Anmeldenummer: 02781245.2
(22) Anmeldetag: 12.10.2002
(51) Int. Cl.: C09D 133/26, C23C 22/48, C23C 22/56

(54) **OBERFLÄCHENBESCHICHTETE AL/ZN-STAHLBLECHE UND OBERFLÄCHENBESCHICHTUNGSMITTEL**
SURFACE-COATED AL/ZN STEEL SHEETS AND SURFACE COATING AGENT
TOLES D'ACIER AL/ZN A REVETEMENT DE SURFACE ET PRODUIT DE REVETEMENT DE SURFACE

(30) Priorität: 22.10.2001 JP 2001323876; 02.11.2001 JP 2001338312
(43) Veröffentlichungstag der Anmeldung: 14.07.2004
(73) Patentinhaber: Henkel Kommanditgesellschaft auf Aktien, 40589 Düsseldorf (DE)
(72) Erfinder: OGINO, Takao, Hiratsuka-shi, Kanagawa Pref. 254-0081 (JP); SHONO, Akira, Yokohama-shi, Kanagawa Pref. 223-0056 (JP); KINOSHITA, Yasuhiro, Kimitsu-shi, Chiba Pref. 299-1151 (JP); HAYASHI, Yoshihiro, Yokohama-shi, Kanagawa Pref. 245-0063 (JP)
(86) Internationale Anmeldenummer: PCT/EP2002/011448
(87) Internationale Veröffentlichungsnummer: WO 2003/035280

(56) Entgegenhaltungen:
- EP-A- 0 659 855
- EP-A- 1 146 144
- US-A- 5 908 892

## Beschreibung

Die Erfindung betrifft in ihrem allgmeinsten Aspekt oberflächenbehandelte Stahlbleche, die überwiegend unlackiert für Anwendungen im Bau- und Haushaltsgerätebereich verwendet werden, bei welchen auf der mit einem Überzug aus aluminiumhaltiger Zinklegierung ("Al/Zn-Legierung") versehenen Oberfläche eine Beschichtung mit hervorragender Alkali- und Korrosionsbeständigkeit ausgebildet ist.

In einem spezielleren Aspekt betrifft die Erfindung ein chromfreies Oberflächenbehandlungsmittel, das Al/Zn-Stahlblechen, d.h. Stahlbleche mit einem Überzug aus Al/Zn-Legierung, die überwiegend unlackiert für Anwendungen im Bau- und Haushaltsgerätebereich verwendet werden, Alkalibeständigkeit, Kaltwalzbarkeit und Korrosionsbeständigkeit verfeiht, und Al/Zn-Stahlbleche, deren Oberflächen mit diesem Oberflächenbehandlungsmittel behandelt sind.

Al/Zn-Stahlbleche, insbesondere solche mit Al-Gehalten von 55% im Al/Zn-Legierungsüberzug, werden wegen ihrer hervorragender Korrosionsbeständigkeit für Hochbauzwecke (z.B. Gebäudedächer und -außenwände, Stützen für Plastik-Gewächshäuser in der Landwirtschaft), Konstruktionen im Tiefbau (z.B. Leitplanken, Schallschutzwände, Abwassergräben), Haushaltsgeräte, Industriegeräte und ähnliches ohne Lackierung verwendet. Daher wird von ihnen verlangt, daß sie dauerhaft ein ansprechendes Aussehen zeigen, ohne daß sich ihre Oberfläche verfärbt. Da sie zudem bei Anwendungen als Baumaterial durch Walzen geformt werden, müssen sie kaltwalzbar sein, d.h. es darf keine Bildung von Überzügen auf den Walzen geben. Wichtig ist ebenfalls ihr Aussehen nach dem Kaltwalzen: die Überzüge bzw. Beschichtungen müssen kratzerfrei sein und eine hervorragende Korrosionsfestigkeit aufweisen. Wenn die Bleche für Anwendungen im Baubereich eingesetzt werden, sind sie, aufgrund des Kontakts mit Beton, nicht selten einem stark alkalischen, korrosiven Milieu ausgesetzt. Auch in diesen Fällen müssen sie ein dauerhaft schönes Aussehen aufweisen, ohne daß sich ihre Oberflächen verfärben.

Zur Verbesserung dieser Thematik, insbesondere zur Verbesserung der Kaltwalzbarkeit und der Korrosionsbeständigkeit wird in der JP-B2 4-2672 eine Technologie vorgeschlagen, die vorsieht, durch Auftragen einer Lösung, die ein definiertes wasserlösliches bzw. dispergierbares Harz mit einem Zusatz von sechswertigem Chrom enthält und deren pH-Wert auf 3 bis 10 eingestellt ist, auf der Oberfläche eines Al/Zn-Stahlblechs eine Beschichtung zu bilden.

Wenn Al/Zn-Stahlbleche für Anwendungen im Baubereich eingesetzt werden, sind sie, aufgrund des Kontakts mit Beton, nicht selten einem stark alkalischen, korrosiven Milieu ausgesetzt. Auch in diesen Fällen müssen sie ein dauerhaft schönes Aussehen aufweisen, ohne daß sich ihre Oberflächen verfärben. d.h. von ihnen wird eine hohe Alkalibeständigkeit gefordert. Im alkalischen Bereich stabile wasserlösliche bzw. dispergierbare Harze neigen im allgemeinen dazu, mit Alkalien Salze zu bilden, und somit das hydrophile Verhalten der Beschichtung zu verstärken. Daher führt auch die aus der JP-B2 4-2672 bekannte Technologie zu nur unzureichend alkalibeständigen Oberflächen. Aus diesem Grund können mit der Technologie nach dem Stand der Technik bislang keine Al/Zn-Stahlbleche mit einer Beschichtung erhalten werden, die sowohl die Forderung nach hervorragender Alkalibeständigkeit als auch die Forderung nach hoher Korrosionsfestigkeit erfüllt.

Ein weiteres Beispiel, wonach die Bleche mit chromhaltigen Harzbeschichtungen versehen werden, sind die aus der JP 2097278 bekannte Oberflächenbehandlungsverfahren. Hierbei ist vorgesehen, zur Verbesserung von Kaltwalzbarkeit und Korrosionsbeständigkeit auf die Oberfläche von Al/Zn-Stahlblechen eine Lösung aufzutragen, die zusätzlich zu bestimmten wasserbasierten oder dispergierbaren Harzen sechswertiges Chrom in bestimmten Mengen enthält und deren pH-Wert auf 3 bis 10 eingestellt ist. Die entsprechend behandelten Al/Zn-Stahlbleche zeigen eine hervorragende Korrosionsbeständigkeit insbesondere in verarbeiteten Bereichen, diese Bleche sind jedoch unter Umweltschutzaspekten problematisch, da aus der Beschichtung, insbesondere in Bereichen von bei der Verarbeitung entstandenen Kratzern, Chrom austritt. Bislang stehen daher noch keine chromfrei oberflächenbehandelte Al/Zn-Stahlbleche zur Verfügung, die die Anforderungen nach hervorragender Kaltwalzbarkeit und Alkali- sowie Korrosionsbeständigkeit erfüllen.

Die Erfinder haben gefunden, daß Mängel des Standes der Technik dadurch gelöst werden können, daß auf der Oberfläche von Al/Zn-Stahlblech eine im wesentlichen aus Säureamidbindungen enthaltendem Harz bestehende Beschichtung ausgebildet wird. Durch Aufbringen einer spezielleren, im wesentlichen aus nachstehend definierten Harzen bestehenden Beschichtung kann zusätzlich die weitergehende Aufgabe gelöst werden, chromfreie Oberflächenbehandlungsmittel und chromfreie oberflächenbehandelte Al/Zn-Stahlbleche mit den erwünschten Merkmalen zur Verfügung zu stellen.

Die Erfindung liefert somit in ihrem allgemeinsten Aspekt ein oberflächenbehandeltes Stahlblech, das dadurch gekennzeichnet ist, daß auf der Oberfläche eines Stahlblechs mit einem Überzug aus aluminiumhaltiger Zinklegierung ("Al/Zn-Legierung") eine Beschichtung ausgebildet ist, die als Hauptbestandteil ein Säureamidbindungen enthaltendes Harz enthält. Als Säureamidbindungen enthaltendes Harz wird vorzugsweise Säureamidbindungen enthaltendes Urethanharz eingesetzt. Die im wesentlichen aus Säureamidbindungen enthaltendem Harz bestehende Beschichtung kann darüber hinaus als weitere Komponente eine Chromverbindung enthalten. Das Gewichtsverhältnis Harz/Cr von Trockengewicht des Säureamidbindungen enthaltenden Harzes zum Gewicht der Chromverbindung (gerechnet als metallisches Chrom) liegt dabei vorzugsweise in einem Bereich von 1 bis 200. Der Chrom-Gehalt in der Beschichtung liegt, gerechnet als metallisches Chrom, vorzugsweise in einem Bereich von 1 bis 100 mg/m².

Bei dem als Substrat für das erfindungsgemäße oberflächenbehandelte Stahlblech verwendete Al/Zn-Stahlblech handelt es sich um mit einem Überzug aus Al/Zn-Legierung (Al-Gehalt im Legierungsüberzug: 25 bis 75 Gew.-%) versehene Stahlbleche, als deren typischste Vertreter solche mit einem Überzug aus Zinklegierungen mit einem Al-Gehalt von 55% bekannt sind (Üblicherweise werden Stahlbleche mit einem Überzug aus Zinklegierungen mit Al-Gehalten von 50 bis 60 Gew.% als 55% Al/Zn-Stahlbleche (z.B. Galvalume®) bezeichnet. Dieser Terminologie folgt auch die vorliegende Efindung.) Der Legierungsüberzug dieser Al/Zn-Stahlbleche weist im allgemeinen Si-Gehalte in Größenordnungen ab 0,5 Gew.-% der Al-Gehalte auf. So liegt der Si-Gehalt im Legierungsüberzug von 55% Al/Zn-Stahlblechen üblicherweise bei etwa 1 bis 3 Gew.%. Die durch die Erfindung bedingte eigenschaftsverbessernde Wirkung wird in signifikanter Weise bei Al/Zn-Stahlblechen mit Al-Gehalten von 25 bis 75 Gew.% im Legierungsüberzug, insbesondere jedoch bei den o.g. Al-Gehalten von 55% beobachtet.

Das erfindungsgemäße Stahlblech weist einen auf der Oberfläche von Al/Zn-Stahlblech ausgebildete, im wesentlichen aus Säureamidbindungen enthaltendem Harz bestehende Beschichtung auf. In Gegenwart starker Säure bilden Säureamidbindungen -CONH- instabile Salze, während sie in Gegenwart starker Alkalien die Struktur -C(OH)N- annehmen und somit alkalineutralisierend wirken. Daher sind Harze mit Säureamidbindungen sowohl gegenüber Säuren als auch gegenüber Alkalien beständig und zeigen eine hervorragende Alkali- und Korrosionsbeständigkeit. Das erfindungsgemäße oberflächenbehandelte Stahlblech, auf dessen Oberfläche eine im wesentlichen aus diesen Säureamidbindungen aufweisenden Harzen bestehende Beschichtung ausgebildet ist, zeigen daher nicht allein eine hervorragende Kaltwalzbarkeit und ein hervorragendes Aussehen nach dem Kaltwalzen, sondem besitzen außerdem eine in hervorragender Weise korrosions- und akalibeständige Beschichtung.

Im folgenden wird auf die Säureamidbindungen enthaltenden Harze näher eingegangen. Die Säureamidbindungen können in diesen Harzen sowohl in der Hauptkette als auch in den Seitenketten eingeführt sein. Als Beispiele werden Urethanharze mit eingeführten Säureamidbindungen, Acrylharze mit eingeführten Säureamidbindungen, Esterharze mit eingeführten Säureamidbindungen und Polyamidharze genannt. Aufgrund ihrer Hydrolyse- und Verschleißbeständigkeit werden Urethanharze mit eingeführten Säureamidbindungen bevorzugt. Im Falle von Urethanharzen mit eingeführten Säureamidbindungen liegt das im Harz gegebene Verhältnis von Urethanzu Säureamidbindungen vorzugsweise bei 9/1 bis 1/9. Bei weniger als einer Säureamidbindung pro 9 Urethanbindungen bleibt die mit der Einführung der Säureamidbindungen verbundene Wirkung zu schwach, während bei mehr als 9 Säureamidbindungen pro Urethanbindung die Verschleißbeständigkeit des Urethanharzes unzureichend bleibt. Das Verfahren zur Synthese der Säureamidbindungen enthaltenden Harze ist keinen besonderen Einschränkungen unterworfen, sie werden jedoch vorzugsweise nach industriell genutzten Verfahren synthetisiert.

Das Schichtgewicht der aus den Säureamidbindungen enthaltenden Harzen auf der Oberfläche der Al/Zn-Stahlbleche gebildeten Harzüberzüge ist keinen besonderen Einschränkungen unterworfen. Es liegt jedoch vorzugsweise bei 0,5 bis 5 g/m². Stahlblechüberzüge aus Al/Zn-Legierungen mit Al-Gehalten von 25 bis 75 Gew.-% haben den Nachteil, daß sie hart und spröde sind. Durch das Beschichten mit den vorgenannten Harzen kann jedoch das Ablösen der Legierungsüberzüge verhindert werden. Bei einem Schichtgewicht der Harze unter 0,5 g/cm² bleibt diese Ablösungsschutzwirkung schwach, wie auch die positiven Effekte in Hinblick auf Kaltwalzbarkeit, Korrosionsbeständigkeit usw. gering bleiben. Schichtgewichte von über 5 g/m² sind hingegen unwirtschaftlich, da hier eine Sättigung der positiven Effekte hinsichtlich Ablösungsschutz, Kattwalzbarkeit, Korrosionsbeständigkeit usw. eintritt.

Die aus den Säureamidbindungen enthaltenden Harzen gebildeten Beschichtungen können als zusätzliche Komponente Chromverbindungen enthalten. Von diesen ist eine weitere Verbesserung der Korrosionsbeständigkeit zu erwarten, falls diese für die vorgesehene Anwendung erforderlich ist. Die Chromverbindungen sind keinen besonderen Einschränkungen unterworfen Bevorzugt werden jedoch Verbindungen verwendet, die sechswertiges Chrom enthalten. Als Beispiele für derartige Chromverbindungen werden Chromsäureanhydrid, Ammoniumchromat, Kaliumdichromat, Natriumdichromat, Ammoniumchromat, Kaliumchromat und Natriumchromat genannt. Das Gewichtsverhältnis Harz/Cr von Trockengewicht des Säureamidbindungen enthaltenden Harzes zum Gewicht der Chromverbindung (gerechnet als metallisches Chrom) liegt dabei vorzugsweise in einem Bereich von 1 bis 200, vorzugsweise bei 1 bis 150 und insbesondere bevorzugt in einem Bereich von 10 bis 150. Bei einem Gewichtsverhältnis Harz/Cr unter 1 ist eine Sättigung der chrombedingten Korrosionsschutzwirkung gegeben, weshalb derartige Gewichtsverhältnisse unwirtschaftlich sind. Bei einem Gewichtsverhältnis Harz/Cr über 200 bleibt hingegen der mit dem Zusatz der Chromverbindungen bewirkte Effekt zu schwach.

Bei der Bildung erfindungsgemäßer Beschichtungen unter Verwendung von Chrom liegt der Chrom-Gehalt in der Beschichtung, gerechnet als metallisches Chrom, vorzugsweise in einem Bereich von 1 bis 100 mg/m², bevorzugter jedoch in einem Bereich von 3 bis 90 mg/m² und insbesondere bevorzugt in einem Bereich von 5 bis 80 mg/m². Bei Chrom-Gehalten in der Beschichtung unter 1 mg/m² (gerechnet als metallisches Cr) bleibt der mit dem Zusatz der Chromverbindungen bewirkte Effekt zu schwach, während Chrom-Gehalte über 100 mg/m² aufgrund der dann gegebenen Sättigung der Korrosionsschutzwirkung des Chroms unwirtschaftlich sind. Das Verfahren zur Bildung der erfindungsgemäßen Beschichtungen auf den Al/Zn-Stahlblechen ist keinen besonderen Einschränkungen unterworfen. Die Beschichtungen können nach beliebigen Verfahren, etwa durch Beschichten mit Walzen (roll coater), aufgetragen werden. Nach dem Auftrag werden die Bleche vorzugsweise bei einer Temperatur (der Bleche) von 60 bis 200 °C und einer Trocknungszeit innerhalb von 60 s beispielsweise in Elektroöfen, Heißluftöfen oder Induktionsöfen getrocknet.

Ein Gegenstand der vorliegenden Erfindung in ihrem spezielleren Aspekt ist ein chromfreies Oberflächenbehandlungsmittel, das dadurch gekennzeichnet ist, daß es die folgenden Komponenten A, B und C enthält:
A) ein Carboxylgruppen und Säureamidbindungen enthaltendes wasserbasiertes Harz,
B) eine oder mehrere Metallverbindungen, ausgewählt aus der Gruppe der Al-, Mg-, Ca-, Zn-, Ni-, Co-, Fe-, Zr-, Ti-, V-, W-, Mn- und Ce-Verbindungen,
C) eine Silicium-Verbindung.

Bevorzugt werden hierbei chromfreie Oberflächenbehandlungsmittel, in welchen als Komponente A Urethan- oder Acrylharz, als Komponente B eine Zr-Verbindung und als Komponente C eine oder mehrere Silicium-Verbindungen, ausgewählt aus der Gruppe, die Kieselsäure, Kieselsäuresalze, kolloides Siliciumoxid und Silan-Kupplungsreagenzien umfaßt, verwendet werden. Insbesondere werden solche chromfreien Oberflächenbehandlungsmittel bevorzugt, in denen als Komponente C Silan-Kupplungsreagenzien verwendet werden.

In diesen Oberflächenbehandlungsmitteln liegt das Massenverhältnis (Harz/Zr) von Komponente A, Carboxylgruppen und Säureamidbindungen enthaltendes wasserbasiertes Harz (Feststoff), zu Zr in den Zr-Verbindungen der Komponente B vorzugsweise in einem Bereich von 1 bis 300. Das Gewichtsverhältnis (Harz/Si) von Komponente A zu Si im Silan-Kupplungsreagenz liegt vorzugsweise in einem Bereich von 10 bis 800.

Diese erfindungsgemäßen Oberflächenbehandlungsmittel für Metallbleche, insbesondere jedoch zur Anwendung auf Al/Zn-Stahlblechen, sind Abmischungen von Harzen der Komponente A mit Metallverbindungen der Komponente B und Silicium-Verbindungen der Komponente C. Zur ihrer Herstellung kann beispielsweise Wasser in einem Gefäß vorgelegt werden. Dann werden - in dieser Reihenfolge - die Harze der Komponente A, die Metallverbindungen der Komponente B und die Silicium-Verbindungen der Komponente C zugesetzt und durch Rühren, etwa mit einem Propellerrührer, vermischt.

Die wasserbasierten Harze der Komponente A bestehen im wesentlichen aus Carboxylgruppen und Säureamidbindungen enthaltenden Harzen und bilden auf der Metalloberfläche eine Beschichtung. Die Carboxylgruppen fördern als hydrophile Gruppen nicht nur die Emulsionsstabilität, sondern ihre Gegenwart verbessert auch die Haftung auf dem Metallsubstrat. Außerdem ermöglicht ihre Vemetzungsreaktion mit den im Mittel befindlichen Metall- und Silicium-Verbindungen die Bildung einer Beschichtung mit hervorragender Korrosions- und Alkalibeständigkeit. Das Carbonsäure-Äquivalent in den wasserbasierten Harzen zum Einsatz in der Erfindung liegt vorzugsweise bei 0,15 bis 3,5 mg Äquivalent/g. Die in den Harzen enthaltenen Säureamidbindungen -CONH- nehmen in Gegenwart starker Alkalien die Struktur - C(OH)N- an und wirken als Säure. Da Säureamidbindungen mit Säure zu instabilen Salzen reagieren und Alkali neutralisieren, sind Säureamidbindungen enthaltende Harze sowohl gegenüber Säure als auch gegenüber Alkali beständig und bieten somit eine hervorragende Korrosions- und Alkalibeständigkeit. Das Säureamidhervorragende Korrosions- und Alkalibeständigkeit. Das Säureamid-Äquivalent in den wasserbasierten Harzen zum Einsatz in der Erfindung liegt vorzugsweise bei 0,05 bis 3,5 mg Äquivalent/g. Beispiele für Harze mit Carboxylgruppen und Säureamidbindungen sind u.a. Acryl-, Ester- und Urethanharze, in welche Carboxylgruppen und Säureamidbindungen eingeführt sind. Diese Harze sind sogenannte wasserbasierte Harze, d.h. sie werden in wäßrigen Systemen, d.h. in in Wasser gelöster oder emulgierter Form verwendet. Unter den Aspekten von Hydrolyse- und Verschleißbeständigkeit der Beschichtung werden vorzugsweise Urethanharze verwendet. Das Verfahren zur Synthese der Harze ist keinen besonderen Einschränkungen unterworfen, sie werden jedoch vorzugsweise nach industriell genutzten Verfahren synthetisiert.

Als Metallsalze der den wasserbasierten Harzen der Komponente A zugesetzten Komponente B werden bevorzugt eine oder mehrere Metallverbindungen, ausgewählt aus der Gruppe der Al-, Mg-, Ca-, Zn-, Ni-, Co-, Fe-, Zr-, Ti-, V-, W-, Mn- und Ce-Verbindungen, eingesetzt. Als derartige Metallverbindungen können Phosphate, Acetate, Nitrate, Sulfate, Carbonate, Ammoniumcarbonate, Chloride, Fluoride, Ammoniumfluoride, Fluorid-Komplexe, Acetylacetonate und dergleichen verwendet werden.

Wenn insbesondere Zr-Verbindungen als Metallverbindungen der Komponente B verwendet werden, liegt das Massenverhältnis (Harz/Zr) von Komponente A, Carboxylgruppen und Säureamidbindungen enthaltendes wasserbasiertes Harz (Feststoff), zu Zr in den Zr-Verbindungen der Komponente B vorzugsweise in einem Bereich von 1 bis 300, bevorzugter in einem Bereich von 1 bis 200 und besonders bevorzugt in einem Bereich von 10 bis 150. Massenverhältnisse (Harz/Zr) des Carboxylgruppen und Säureamidbindungen enthaltenden wasserbasiertesnHarzes (Feststoff) zu Zr in den Zr-Verbindungen unter 1 sind unwirtschaftlich, da eine Sättigung der durch die Zr-Verbindungen bewirkten antikorrosiven Wirkung eintritt: Entsprechende Massenverhältnisse über 300 sind hingegen unvorteilhaft aufgrund der dann nur schwachen antikorrosiven Wirkung der Zr-Verbindungen. Dies gilt analog für die Fälle, in denen die anderen Metallverbindungen zum Einsatz kommen.

Die den wasserbasierten Harzen der Komponente A zuzusetzenden Silicium-Verbindungen sind keinen besonderen Einschränkungen unterworfen. Bevorzugt werden jedoch eine oder mehrere Silicium-Verbindungen, ausgewählt aus der Gruppe, die Kieselsäure, Kieselsäuresalze, kolloides Siliciumoxid und Silan-Kupplungs-reagenzien umfaßt, verwendet. Besonders bevorzugt werden hiervon Silan-Kupplungsreagenzien wie Vinyltrimethoxysilan und gamma-Glycidoxypropyltriethoxysilan eingesetzt.

Bei der Verwendung von Silan-Kupplungsreagenzien als Silicium-Verbindung der Komponente C liegt das Massenverhältnis (Harz/Si) von Carboxylgruppen und Säureamidbindungen enthaltenden Harzen der Komponente A zu Si im Silan-Kopplungsmittel vorzugsweise in einem Bereich von 10 bis 800, bevorzugter jedoch in einem Bereich von 50 bis 600 und insbesondere bevorzugt in einem Bereich von 100 bis 400. Massenverhältnisse (Harz/Si) von Carboxylgruppen und Säureamidbindungen enthaltenden Harzen der Komponente A zu Si im Silan-Kupplungsreagenz unter 10 sind unwirtschaftlich, da eine Sättigung der durch die Silan-Kupplungsreagenzien bewirkten antikorrosiven Wirkung eintritt. Hingegen sind Massenverhältnisse (Harz/Si) von Carboxylgruppen und Säureamidbindungen enthaltenden Harzen der Komponente A zu Si im Silan-Kopplungsmittel über 800 aufgrund der dann nur schwachen antikorrosiven Wirkung der Silan-Kupplungsreagenzien. Dies gilt analog für die Fälle, in denen die anderen Silicium-Verbindungen zum Einsatz kommen.

Erfindungsgemäßen Oberflächenbehandlungsmitteln für Metallbleche können als Gleitmittel u.a. Molybdändisulfid, Graphit, Fluorharze, Polyolefinwachse zugesetzt werden. Außerdem kann die Beschichtung durch Einsatz von Farbpigmenten gefärbt werden. Solange die Leistungen der Beschichtung nicht beeinträchtigt werden, können die Oberflächenbehandlungsmitteln auch Schauminhibitoren und Egalisierungsmittel (Verlaufhilfsmittel) zugesetzt werden.

Die Verfahren zur Behandlung der Oberflächen von Al/Zn-Stahlblechen mit erfindungsgemäßen Oberflächenbehandlungsmitteln für Metallbleche sind keinen besonderen Einschränkungen unterworfen, sie können in beliebigen Verfahren, beispielsweise unter Einsatz von Roll-Coatem, aufgetragen werden. Nach dem Auftrag werden die Bleche vorzugsweise bei einer Temperatur (der Bleche) von 60 bis 200 °C und einer Trocknungszeit innerhalb von 60 s beispielsweise in Elektroöfen, Heißluftöfen oder Induktionsöfen getrocknet.

Das Gewicht der mit den erfindungsgemäßen Oberflächenbehandlungsmitteln auf Al/Zn-Stahlblechoberflächen gebildetzen Schichten (Schichtgewicht) nach Trocknung ist keinen besonderen Beschränkungen unterworfen, es liegt jedoch vorzugsweise in einem Bereich von 0,5 bis 5 g/m². Stahlblechüberzüge aus Al/Zn-Legierungen mit Al-Gehalten von 25 bis 75 Gew.% haben den Nachteil, daß sie hart und spröde sind. Durch das Beschichten mit den vorgenannten Harzen kann jedoch das Ablösen der Legierungsüberzüge verhindert werden. Bei einem Schichtgewicht der Harze unter 0,5 g/cm² bleibt diese Ablösungsschutzwirkung schwach, Schichtgewichte von über 5 g/m² sind hingegen unwirtschaftlich, da hier eine Sättigung der Ablösungsschutzwirkung eintritt.

Ein weiterer Gegenstand der Erfindung in ihrem spezielleren Aspekt sind chromfrei oberflächenbehandelte Al/Zn-Stahlbleche mit hervorragender Alkalibeständigkeit, Kaltwalzbarkeit und Korrosionsbeständigkeit, die dadurch gekennzeichnet sind, daß zumindest einseitig mit einem Schichtgewicht von 0,2 bis 5,0 g/m² eine Beschichtung aufgebracht ist, welche die folgenden Komponenten A, B und C enthält:
A) ein Carboxylgruppen und Säureamidbindungen enthaltendes wasserbasiertes Harz,
B) eine oder mehrere Metallverbindungen, ausgewählt aus der Gruppe der Al-, Mg-, Ca-, Zn-, Ni-, Co-, Fe-, Zr-, Ti-, V-, W-, Mn- und Ce-Verbindungen,
C) eine Silicium-Verbindung.

Hierbei werden als Komponente A vorzugsweise Urethan- oder Acrylharz, als Komponente B bevorzugt eine Zr-Verbindung und als Komponente C vorzugsweise eine oder mehrere Silicium-Verbindungen, ausgewählt aus der Gruppe, die Kieselsäure, Kieselsäuresalze, kolloides Siliciumoxid und Silan-Kupplungsreagenzein umfaßt, verwendet. Insbesondere wird die Verwendung von Silan-Kopplungsmittel als Komponente C bevorzugt.

Das bei diesen chromfreien oberflächenbehandelten Al/Zn-Stahlblechen gegebene Massenverhältnis (Harz/Zr) von Komponente A, Carboxylgruppen und Säureamidbindungen enthaltendes wasserbasiertes Harz (Feststoff), zu Zr in den Zr-Verbindungen der Komponente B liegt vorzugsweise in einem Bereich von 1 bis 300, das Massenverhältnis (Harz/Si) von Komponente A zu Si im Silan-Kupplungsreagenz liegt vorzugsweise in einem Bereich von 10 bis 800.

Für die als Substrate verwendeten Al/Zn-Stahlbleche gelten die weiter oben im Zusammenhang mit dem allgemeinen Aspekt der Erfindung gegebenen Erläuterungen.

### Ausführungsbeispiele

Im folgenden wird die Erfindung durch Ausführungsbeispiele und Vergleichsbeispiele ohne Einschränkung des Gegenstandes der Erfindung auf die gegebenen Beispiele illustriert. In den Beispielen beziehen sich Angaben in Teilen und % stets auf das Gewicht.

Herstellung von Testblechen
1. Materialien
   5% Al/Zn-Stahlblech (GF = Galfan^{R})
   55% Al/Zn-Stahlblech (GL = Galvalume^{R})
2. Entfetten

Nach Entfetten (Fine Cleaner^{R} 4336 (eingetragenes Warenzeichen von Nihon Parkerizing (Japan), alkalisches Entfettungsmittel auf Silicatbasis, Konzentration 20 g/l, Temperatur 60 °C, 20 Sekunden Sprühen) Reinigung mit Leitungswasser.

### A) Allgemeiner Aspekt der Erfindung (fakultativ chromhaltig)

A3. Synthese der Harze
A3.1 Säureamidbindungen enthaltendes Urethanharz
   100 Teile Polyesterharz (zahlenmittleres Molekulargewicht 1000, endständige Carboxylgruppen), 100 Teile Diolverbindung (zahlenmittleres Molekulargewicht: 1000, endständige Hydroxylgruppen), 15 Teile 2,2-Dimethylolpropionsäure, 100 Teile Dicyclohexylmethandiisocyanat, 100 Teile N-Methyl-2-pyrrolidon wurden zu einem Prepolymer umgesetzt und in deionisiertem Wasser dispergiert.
A3.2 Säureamidbindungen enthaltendes Acrylharz
   Nach Umsetzen von 10 Teilen Acrylsäure mit 5 Teilen Isophorondiisocyanat wurden 25 Teile Styrol, 10 Teile Methylmethacrylat, 20 Teile Butylmethacrylat und 30 Teile 2-Ethylhexylacrylat zugesetzt. Durch Eintropfen dieses Ansatzes in eine tensidhaltige wäßrige Lösung wurde Acrylharz erhalten.
A3.3 Ethylen-modifiziertes Acrylharz
   Es wurde eine wäßrige Ethylen-Acrylsäure-Copolymer-Dispersion verwendet.

A4. Zubereitung der Lösung zur Oberflächenbehandlung
Bei Zimmertemperatur wurden die in Tabelle A1 aufgeführten Harze (Feststoffkonzentration jeweils 25%) und die in Tabelle A2 aufgeführten Chromverbindungen (Cr-Konzentration, gerechnet als metallisches Cr, jeweils 5%) in dieser Reihenfolge in destilliertes Wasser gegeben und durch Rühren mit einem Propeller-Rührer vermischt. Auf diese Weise wurden die in Tabelle A3 aufgeführten Lösungen zur Oberflächenbehandlung C1 ~ C8 und D1 ~ D2 zubereitet.

**Tabelle A1**

| Nr. | Harz | Säureamidbindungen |
|---|---|---|
| A1 | Urethanharz | ja |
| A2 | Acrylharz | ja |
| A3 | Ethylen-modifiziertes Acrylharz | nein |

**Tabelle A2**

| Nr. | Chromverbindung (sechswertiges Cr / (dreiwertiges. Cr + sechswertiges Cr) | |
|---|---|---|
| B1 | sechswertiges Cr + dreiwertiges Cr | 0,7 |
| B2 | sechswertiges Cr | 1,0 |

**Tabelle A3**

| Nr. | Zusammensetzung (Gew.-Teile) | | Harz/Cr |
|---|---|---|---|
| | Harz | Cr-Verbindung | |
| C1 | A1 (95) | B1 (5) | 95 |
| C2 | A1 (95) | B2 (5) | 95 |
| C3 | A1 (92) | B1 (8) | 58 |
| C4 | A2 (85) | B2 (15) | 18 |
| C5 | A2 (75) | B1 (25) | 15 |
| C6 | A2 (97) | B2 (3) | 162 |
| C7 | A1 (100) | - | - |
| C8 | A2 (100) | - | - |
| D1 | A3 (95) | B2 (5) | 95 |
| D2 | A3 (85) | B2 (15) | 28 |

### Anfertigung der oberflächenbehandelten Stahlbleche

Die Oberflächenbehandlungsmittel C1 ~ C8 bzw. D1 ~ D2 wurden mit einem Barcoater so auf die Oberflächen der GL- und GF-Testbleche aufgetragen, daß die in den Tabellen A4 (Ausführungsbeispiele 1 bis 12) und A5 (Vergleichsbeispiele 1 bis 4) angegebenen Schichtgewichte und Cr-Auftragsmengen erreicht wurden. Anschließend wurde bei 240°C Umgebungstemperatur getrocknet. Die Schichtgewichte (g/m²) wurden über die entsprechende Wahl der Feststoffkonzentration in den Oberflächenbehandlungsmitteln eingestellt. Anschließend wurde die Korrosionsbeständigkeit (der ebenen Fläche) und Alkalibeständigkeit (ebene Fläche) der oberflächenbehandelten Stahlbleche gemäß dem im folgenden beschriebenen Verfahren zur Bewertung der Beschichtungsleistungen bewertet. Die Ergebnisse sind in den Tabellen A4 und A5 zusammengestellt.

**Tabelle A4:**

| Ausführungsbeispiele | | | | | | |
|---|---|---|---|---|---|---|
| Nr. | Substrat | OBM | Schicht- | Cr-Auftrag | Korrosicins- Alkali- | |
| | | | gewicht (g/m²) | (mg/m²) | beständigkeit | |
| 1 | GL | C1 | 1,5 | 15,8 | 1 | 1 |
| 2 | GL | C2 | 1,5 | 15,8 | 1 | 1 |
| 3 | GL | C3 | 1,5 | 25,9 | 1 | 1 |
| 4 | GL | C4 | 1,5 | 53,6 | 1 | 1 |
| 5 | GL | C5 | 1,5 | 100,0 | 1 | 1 |
| 6 | GL | C6 | 1,5 | 9,3 | 1 | 1 |
| 7 | GL | C7 | 1,5 | 0 | 2 | 1 |
| 8 | GL | C8 | 1,5 | 0 | 2 | 1 |
| 9 | GL | C1 | 0,5 | 5,1 | 1 | 1 |
| 10 | GL | C2 | 3,0 | 31,9 | 1 | 1 |
| 11 | GF | C3 | 1,5 | 25,9 | 1 | 1 |
| 12 | GF | C4 | 1,5 | 53,6 | 1 | 1 |
| (Abkürzungen: OBM = Oberflächenbehandlungsmittel Nr.; Korrosionsbeständigkeit = Korrosionsbeständigkeit der ebenen Fläche) | | | | | | |

**Tabelle A5:**

| Vergleichsbeispiele | | | | | | |
|---|---|---|---|---|---|---|
| Nr. | Substrat | OBM | Schicht- | Cr-Auftrag | Korrosions- Alkali- | |
| | | | gewicht (g/m²) | (mg/m²) | beständigkeit | |
| 1 | GL | D1 | 1,5 | 15,8 | 3 | X |
| 2 | GL | D2 | 1,5 | 53,6 | 2 | X |
| 3 | GL | D1 | 3,0 | 31,6 | 2 | X |
| 4 | GL | D2 | 5,0 | 178,7 | 2 | X |
| (Abkürzungen: wie Tabelle A4) | | | | | | |

### Verfahren zur Bewertung der Beschichtungsleistungen

### 1. Korrosionsbeständigkeit in der ebenen Fläche

Nach 240 h Salzsprühtest gemäß JIS-Z-2371 wurde die Rostbildung begutachtet und nach den folgenden Kriterien bewertet:
- 1: Keine Rostbildung
- 2: Rostbildung auf weniger als 10% der Gesamtfläche
- 3: Rostbildung auf 10% bis weniger als 30% der Gesamtfläche
- X: Rostbildung auf 30% und mehr der Gesamtfläche

### Alkalibeständigkeit

Die Testbleche wurden 5 Stunden in 1 %-ige wäßrige NaOH-Lösung getaucht und der Zustand der Beschichtung vor und nach dem Eintauchen miteinander verglichen. Die Bewertung erfolgte nach folgenden Kriterien:
- 1: Aussehen unverändert
- 2: Anteil verfärbter Areale geringer als 10% der Gesamtfläche
- 3: Anteil verfärbter Areale 10% bis weniger als 30% der Gesamtfläche
- X: Anteil verfärbter Areale 30% und mehr der Gesamtfläche

Wie die Tabellen A4 und A5 belegen, zeigen die erfindungsgemäßen oberflächenbehandelten Stahlbleche sowohl eine gute Korrosions- als auch eine gute Alkalibeständigkeit. Demgegenüber ist bei den oberflächenbehandelten Stahlblechen der Vergleichsbeispiele, welche die Merkmale der Erfindung nicht erfüllen, entweder eine mangelhafte Korrosions- oder eine mangelhafte Alkalibeständigkeit festzustellen. Vorteile der Erfindung

Erfindungsgemäße Al/Zn-Stahlbleche mit einer auf ihren Oberflächen ausgebildeten, aus bestimmten (vorstehend beschriebenen) Harzen bestehenden Beschichtung zeigen sowohl eine hervorragende Korrosionsbeständigkeit als auch eine hervorragende Alkalibeständigkeit. Die erfindungsgemäßen Stahlbleche sind außerdem gut kaltwalzbar (d.h. kein Aufbau von Überzügen auf den Walzen) und weisen ein hervorragendes Aussehen nach dem Kaltwalzen auf. Sie sind daher in der Industrie von hohen Nutzwert.

### B) Spezieller (chromfreier) Aspekt der Erfindung

B3. Synthese der Harze
B3.1 Säureamidbindungen enthaltendes Urethanharz
100 Teile Polyesterharz (zahlenmittleres Molekulargewicht: 1000, endständige Carboxylgruppen), 100 Teile Diolverbindung (zahlenmittleres Molekulargewicht: 1000, endständige Hydroxylgruppen), 15 Teile 2,2-Dimethylolpropionsäure, 100 Teile Dicyclohexylmethandiisocyanat, 100 Teile N-Methyl-2-pyrrolidon wurden zu einem Prepolymer umgesetzt und in deionisiertem Wasser dispergiert. Kenndaten des Urethanharzes: Carbonsäure-Äquivalent: 0,75 mg Äquivalent/g, Säureamid-Äquivalent: 0,5 mg Äquivalent/g.
B3.2 Säureamidbindungen enthaltendes Acrylharz
Nach Umsetzen von 10 Teilen Acrylsäure mit 5 Teilen Isophorondiisocyanat wurden 25 Teile Styrol, 10 Teile Methylmethacrylat, 20 Teile Butylmethacrylat und 30 Teile 2-Ethylhexylacrylat zugesetzt. Durch Eintropfen dieses Ansatzes in eine tensidhaltige wäßrige Lösung wurde Acrylharz erhalten. Kenndaten des Urethanharzes: Carbonsäure-Äquivalent: 0,75 mg Äquivalent/g, Säureamid-Äquivalent: 0,5 mg Äquivatent/g. Bei Zimmertemperatur wurden die in Tabelle B1 aufgeführten Harze, die in Tabelle B2 aufgeführten Metallverbindungen und die in Tabelle B3 aufgeführten Silicium-Verbindungen in dieser Reihenfolge in destilliertes Wasser gegeben und durch Rühren mit einem Propeller-Rührer vermischt. Auf diese Weise wurden die in Tabelle B4 aufgeführten Oberflächenbehandlungsmittel zubereitet.

**Tabelle B1**

| Nr. | Harz | Säureamidbindungen | Carboxylgruppen |
|---|---|---|---|
| A1 | Urethanharz | ja | ja |
| A2 | Acrylharz | ja | ja |
| A3 | Ethylen-modifiziertes Acrylharz | nein | ja |
| (Feststoffkonzentration der Harze jeweils 25%) | | | |

**Tabelle B2**

| Nr. | Metallverbindung |
|---|---|
| B1 | Zirconiumammoniumcarbonat |
| B2 | Zirconiumammoniumfluorid |
| B3 | Titanacetylacetonat |
| B4 | Ammoniumvanadat |
| B5 | Cobaltcarbonat |

**Tabelle B3**

| Nr. | Silicium-Verbindung |
|---|---|
| C1 | Vinyltrimethoxysilan |
| C2 | gamma-Glycidoxypropyltriethoxysilan |
| C3 | kolloides Siliciumoxid |
| C4 | Kaliumsilicat |

**Tabelle B4**

| Nr. Zusammensetzung (Gewichtsteile) | | | | | | | | |
|---|---|---|---|---|---|---|---|---|
| | Harz | | Me-Verbindung | | Si-Verbindung | | Harz/Metall | Harz/Si |
| D1 | A1 | 100 | B1 | 2 | C1 | 0,2 | 50 | 500 |
| D2 | A1 | 300 | B2 | 3 | C1 | 1 | 100 | 300 |
| D3 | A1 | 150 | B3 | 1 | C2 | 0,75 | 150 | 200 |
| D4 | A1 | 700 | B4 | 3,5 | C2 | 1 | 200 | 700 |
| D5 | A1 | 100 | B5 | 1 | C2 | 1 | 100 | 100 |
| D6 | A1 | 150 | B1 | 1 | C3 | 0,5 | 150 | 300 |
| D7 | A1 | 150 | B1 | 1 | C4 | 0,75 | 150 | 200 |
| D8 | A2 | 300 | B1 | 3 | C1 | 1 | 100 | 300 |
| D9 | A2 | 100 | B2 | 2 | C2 | 0,25 | 50 | 400 |
| D10 | A1 | 100 | B2 | 0,25 | C1 | 0,2 | 400 | 500 |
| D11 | A1 | 100 | B2 | 2 | C1 | 0,1 | 50 | 1000 |
| D12 | A1 | 100 | B1 | 1 | - | - | 100 | - |
| D13 | A1 | 100 | - | - | C2 | 0,5 | - | 200 |
| D14 | A3 | 100 | B1 | 2 | C1 | 0,2 | 50 | 500 |
| D15 | A3 | 150 | B2 | 1 | C2 | 0,5 | 150 | 300 |

B5. Anfertigung der oberflächenbehandelten Stahlbleche
Die beschriebenen Oberflächenbehandlungsmittel wurden mit einem Barcoater auf die Oberflächen der Testbleche aufgetragen, anschließend wurde bei 240 °C Umgebungstemperatur getrocknet. Die Schichtgewichte (g/m²) wurden über die entsprechende Wahl der Feststoffkonzentration in den Oberflächenbehandlungsmitteln eingestellt.

### Bewertung der Beschichtungsleistungen

### 1. Korrosion in der ebenen Fläche

Nach 240 h Salzsprühtest gemäß JIS-Z-2371 wurde die Rostbildung begutachtet und nach den folgenden Kriterien bewertet:
- 1: Keine Rostbildung
- 2: Rostbildung auf weniger als 10% der Gesamtfläche
- 3: Rostbildung auf 10% bis weniger als 30% der Gesamtfläche
- X: Rostbildung auf 30% und mehr der Gesamtfläche

### Alkalibeständigkeit

Die Testbleche wurden 5h in 1%-ige wäßrige NaOH-Lösung getaucht und der Zustand der Beschichtung vor und nach dem Eintauchen miteinander verglichen. Die Bewertung erfolgte nach folgenden Kriterien:
- 1: Aussehen unverändert
- 2: Anteil verfärbter Areale geringer als 10% der Gesamtfläche
- 3: Anteil verfärbter Areale 10% bis weniger als 30% der Gesamtfläche
- X: Anteil verfärbter Areale 30% und mehr der Gesamtfläche

**Tabelle B5**

| (Ergebnisse/Ausführungsbeispiele) | | | | | |
|---|---|---|---|---|---|
| Nr. | OBM | Schichtgewicht | Substrat | Korrosions- | Alkali- |
| | | (g/m²) | | beständigkeitbeständigkeit | |
| 1 | D1 | 2,0 | GL | 1 | 1 |
| 2 | D2 | 2,0 | GL | 1 | 1 |
| 3 | D3 | 2,0 | GL | 1 | 1 |
| 4 | D4 | 2,0 | GL | 1 | 1 |
| 5 | D5 | 2,0 | GL | 1 | 1 |
| 6 | D6 | 2,0 | GL | 2 | 2 |
| 7 | D7 | 2,0 | GL | 2 | 2 |
| 8 | D8 | 2,0 | GL | 1 | 1 |
| 9 | D9 | 2,0 | GL | 1 | 1 |
| 10 | D1 | 0,5 | GL | 2 | 2 |
| 11 | D2 | 2,0 | GF | 1 | 1 |
| 12 | D3 | 2,0 | GF | 1 | 1 |
| (Abkürzungen: OBM = Oberflächenbehandlungsmittel Nr., Korrosionsbeständigkeit = Korrosionsbeständigkeit der ebenen Fläche) | | | | | |

**Tabelle B6**

| (Ergebnisse/Vergleichsbeispiele) | | | | | |
|---|---|---|---|---|---|
| Nr. | OBM | Schichtgewicht | Substrat | Korrosions- | Alkali- |
| | | (g/m²) | | beständigkeitbeständigkeit | |
| 1 | D10 | 2,0 | GL | 3 | X |
| 2 | D11 | 2,0 | GL | 3 | X |
| 3 | D12 | 2,0 | GL | 3 | X |
| 4 | D13 | 2,0 | GL | 3 | 3 |
| 5 | D14 | 2,0 | GL | X | X |
| 6 | D15 | 2,0 | GF | X | X |
| 7 | D1 | 0,2 | GL | 3 | X |

Die Prüfungsergebnisse (erfindungsgemäße Ausführungsbeispiele und Vergleichsbeispiele) sind in den Tabellen B5 und B6 zusammengestellt. Die erfindungsgemäßen oberflächenbehandelten Stahlbleche der Ausführungsbeispiele Nr. 1 bis 12 zeigen sowohl eine gute Korrosions- als auch eine gute Alkalibeständigkeit. Demgegenüber ist bei den oberflächenbehandelten Stahlblechen der Vergleichsbeispiele Nr. 1 bis 7, welche die Merkmale der Erfindung nicht erfüllen, entweder eine mangelhafte Korrosions- oder eine mangelhafte Alkalibeständigkeit festzustellen.

### Vorteile der Erfindung

Durch Behandlung der Oberflächen von Metallblechen, insbesondere von Al/Zn-Stahlblechen, mit erfindungsgemäßen Oberflächenbehandlungsmitteln wird diesen Blechen eine hervorragende Korrosions- und Alkalibeständigkeit verliehen. Da diese Bleche zudem eine hervorragende Kaltwalzbarkeit zeigen, hat die Erfindung einen hohen industriellen Nutzwert. Da sie chromfrei sind, ergibt sich darüber hinaus auch keine Umweltbelastung.

## Patentansprüche

1. Oberflächenbehandeltes Stahlblech, **dadurch gekennzeichnet, daß** auf der Oberfläche eines Stahlblechs mit einem Überzug aus einer Al/Zn-Legierung eine Beschichtung ausgebildet ist, die als Hauptbestandteil ein Urethanharz mit eingeführten Säureamidgruppen mit einem Verhältnis von Urethan- zu Säureamidbindungen im Bereich von 9:1 bis 1:9 enthält.

2. Oberflächenbehandeltes Stahlblech nach Anspruch 1, wobei die Beschichtung als zusätzliche Komponente eine Chromverbindung enthält.

3. Oberflächenbehandeltes Stahlblech nach Anspruch 2, wobei das Gewichtsverhältnis Harz/Cr von Trockengewicht des Säureamidbindungen enthaltenden Harzes zum Gewicht der Chromverbindung (gerechnet als metallisches Chrom) in einem Bereich von 1 bis 200 liegt

4. Oberflächenbehandeltes Stahlblech nach Anspruch 2 oder 3, wobei der Chrom-Gehalt in der Beschichtung, gerechnet als metallisches Chrom, in einem Bereich von 1 bis 100 mg/m² liegt.

5. Oberflächenbehandeltes Stahlblech mit einem Überzug aus einer Al/Zn-Legierung nach Anspruch 1 mit hervorragender Alkalibeständigkeit, Kaltwalzbarkeit und Korrosionsbeständigkeit, **dadurch gekennzeichnet, daß** es chromfrei oberflächenbehandelt ist und daß zumindest einseitig mit einem Schichtgewicht von 0,2 bis 5,0 g/m² eine Beschichtung aufgebracht ist, welche die folgenden Komponenten A, B und C enthält:
A) ein Urethanharz mit eingeführten Säureamidgruppen mit einem Verhältnis von Urethan- zu Säureamidbindungen im Bereich von 9:1 bis 1:9,
B) eine oder mehrere Metallverbindungen, ausgewählt aus der Gruppe der Al-, Mg-, Ca-, Zn-, Ni-, Co-, Fe-, Zr-, Ti-, V-, W-, Mn- und Ce-Verbindungen,
C) eine Silicium-Verbindung.

6. Chromfrei oberflächenbehandeltes Al/Zn-Stahlblech nach Anspruch 5, bei welchem als Komponente A Urethanharz mit eingeführten Säureamidgruppen mit einem Verhältnis von Urethan- zu Säureamidbindungen im Bereich von 9:1 bis 1:9, als Komponente B eine Zr-Verbindung und als Komponente C eine oder mehrere Silicium-Verbindungen, ausgewählt aus der Gruppe, die Kieselsäure, Kieselsäuresalze, kolloides Siliciumdioxid und Silan-Kupplungsreagenzien umfaßt, verwendet werden.

7. Chromfrei oberflächenbehandeltes Al/Zn-Stahlblech nach Anspruch 5 oder 6, bei welchem als Komponente C ein Silan-Kupplungsreagenz verwendet wird.

8. Chromfrei oberflächenbehandeltes Al/Zn-Stahlblech nach Anspruch 5, 6 oder 7, bei welchem die Komponente B ausgewählt ist aus Zr-Verbindungen und das Massenverhattnis Harz/Zr von Komponente A Feststoff zu Zr in den Zr-Verbindungen der Komponente B in einem Bereich von 1 bis 300 liegt.

9. Chromfrei oberflächenbehandeltes Al/Zn-Stahlblech nach Anspruch 7 oder 8, in welchem das Gewichtsverhältnis Harz/Si von Komponente A Feststoff und Si im Silan-Kupplungsreagenz in einem Bereich von 10 bis 800 liegt.

10. Chromfreies Oberflächenbehandlungsmittel für Metallbleche, **dadurch gekennzeichnet, daß** es die folgenden Komponenten A, B und C enthält:
A) ein Urethanharz mit eingeführten Säureamidgruppen mit einem Verhältnis von Urethan- zu Säureamidbindungen im Bereich von 9:1 bis 1:9,
B) eine oder mehrere Metallverbindungen, ausgewählt aus der Gruppe der Al-, Mg-, Ca-, Zn-, Ni-. Co-, Fe-, Zr-, Ti-, V-, W-, Mn- und Ce-Verbindungen,
C) eine Silicium-Verbindung.

11. Chromfreies Oberflächenbehandlungsmittel für Metallbleche nach Anspruch 10, in welchem als Komponente A Urethanharz mit eingeführten Säureamidgruppen mit einem Verhältnis von Urethan- zu Säureamidbindungen im Bereich von 9:1 bis 1:9, als Komponente B eine Zr-Verbindung und als Komponente C eine oder mehrere Silicium-Verbindungen, ausgewählt aus der Gruppe, die Kieselsäure, Kieselsäuresalze, kolloides Siliciumoxid und Silan-Kupplungsreagenzien umfaßt, verwendet werden.

12. Chromfreies Oberflächenbehandlungsmittel für Metallbleche nach Anspruch 10 oder 11, in welchem als Komponente C ein Silan-Kupplungsreagenz verwendet wird.

13. Chromfreies Oberflächenbehandlungsmittel für Metallbleche nach den Ansprüchen 10, 11 oder 12, in welchem die Komponente B ausgewählt ist aus Zr-Verbindungen und das Massenverhältnis Harz/Zr von Komponente A Feststoff zu Zr in den Zr-Verbindungen der Komponente B in einem Bereich von 1 bis 300 liegt.

14. Chromfreies Oberflächenbehandlungsmittel für Metallbleche nach Anspruch 12 oder 13, in welchem das Gewichtsverhältnis Harz/Si von Komponente A Feststoff zu Si im Silan-Kupplungsreagenz in einem Bereich von 10 bis 800 liegt.

## Claims

1. A surface-treated steel sheet, **characterized in that** on the surface of a steel sheet with a covering of an Al/Zn alloy a coating is formed which comprises as its principal constituent a urethane resin with acid amide groups, with a ratio of urethane bonds to acid amide bonds in the range from 9:1 to 1:9.

2. The surface-treated steel sheet of claim 1, where the coating comprises as an additional component a chromium compound.

3. The surface-treated steel sheet of claim 2, where the resin/Cr weight ratio, of dry weight of the resin containing acid amide bonds to weight of the chromium compound (calculated as metallic chromium), is in a range from 1 to 200.

4. The surface-treated steel sheet of claim 2 or 3, where the chromium content of the coating, calculated as metallic chromium, is in a range from 1 to 100 mg/m².

5. The surface-treated steel sheet with a covering of an Al/Zn alloy of claim 1 with outstanding alkali resistance, cold-rollability, and corrosion resistance, **characterized in that** it has been chromiumlessly surface-treated and **in that** on at least one side, with a coating-weight of from 0.2 to 5.0 g/m², a coating has been applied which comprises the following components A, B, and C:
A) a urethane resin with acid amide groups, with a ratio of urethane bonds to acid amide bonds in the range from 9:1 to 1:9.
B) one or more metal compounds selected from the group consisting of Al, Mg, Ca, Zn, Ni, Co, Fe, Zr, Ti, V, W, Mn, and Ce compounds,
C) a silicon compound.

6. The chromiumlessly surface-treated Al/Zn steel sheet of claim 5, for which as component A urethane resin with introduced acid amide groups, with a ratio of urethane bonds to acid amide bonds in the range from 9:1 to 1:9, as component B a Zr compound, and as component C one or more silicon compounds selected from the group consisting of silica, silicic salts, colloidal silicon dioxide, and silane coupling reagents are used.

7. The chromiumlessly surface-treated Al/Zn steel sheet of claim 5 or 6, for which as component C a silane coupling reagent is used.

8. The chromiumlessly surface-treated Al/Zn steel sheet of claim 5, 6 or 7, for which component B is selected from Zr compounds and the mass ratio resin/Zr of component A solid to Zr in the Zr compounds of component B is in a range from 1 to 300.

9. The chromiumlessly surface-treated Al/Zn steel sheet of claim 7 or 8, in which the weight ratio resin/Zr of component A solid to Si in the silane coupling reagent is in a range from 10 to 800.

10. A chromium-free surface-treatment composition for metal sheets, **characterized in that** it comprises the following components A, B, and C:
A) a urethane resin with introduced acid amide groups, with a ratio of urethane bonds to acid amide bonds in the range from 9.1 to 1:9,
B) one or more metal compounds selected from the group consisting of Al, Mg, Ca, Zn, Ni, Co, Fe, Zr, Ti, V, W, Mn, and Ce compounds,
C) a silicon compound.

11. The chromium-free surface-treatment composition for metal sheets of claim 10, in which as component A urethane resin with introduced acid amide groups, having a ratio of urethane bonds to acid amide bonds in the range from 9:1 to 1:9, as component B a Zr compound, and as component C one or more silicon compounds selected from the group consisting of silica, silicic salts, colloidal silicon oxide, and silane coupling reagents are used.

12. The chromium-free surface-treatment composition for metal sheets of claim 10 or 11, in which as component C a silane coupling reagent is used.

13. The chromium-free surface-treatment composition for metal sheets of claims 10, 11 or 12, in which component B is selected from Zr compounds and the mass ratio resin/Zr of component A solid to Zr in the Zr compounds of component B is in a range from 1 to 300.

14. The chromium-free surface-treatment composition for metal sheets of claim 12 or 13, in which the weight ratio resin/Zr of component A solid to Si in the silane coupling reagent is in a range from 10 to 800.

## Revendications

1. Tôle d'acier à surface traitée, **caractérisée en ce que**, à la surface d'une tôle d'acier, on dépose un revêtement constitué d'un alliage Al/Zn qui contient, comme constituant principal, une résine uréthane dans laquelle sont inclus des groupes amides d'acide, avec un rapport des liaisons uréthane aux liaisons amides d'acide compris dans la gamme de 9:1 à 1:9.

2. Tôle d'acier à surface traitée selon la revendication 1, dans laquelle le revêtement comprend, en tant que composant supplémentaire, un composé du chrome.

3. Tôle d'acier à surface traitée selon la revendication 2, dans laquelle le rapport pondéral résine/Cr, c'est-à-dire le rapport du poids sec de la résine contenant des liaisons amides d'acide au poids du composé du chrome (calculé en tant que chrome métal) est compris dans la gamme de 1 à 200.

4. Tôle d'acier à surface traitée selon la revendication 2 ou 3, dans laquelle la teneur en chrome du revêtement, calculé en tant que chrome métal, est comprise dans la gamme de 1 à 100 mg/m².

5. Tôle d'acier à surface traitée portant un revêtement constitué d'un alliage Al/Zn selon la revendication 1, présentant une excellente résistance aux alcalis, une aptitude au laminage à froid et une résistance à la corrosion remarquables, **caractérisée en ce que** le revêtement de surface est exempt de chrome et qu'au moins une face de la tôle comporte une épaisseur de couche de 0,2 à 5,0 g/m² d'un revêtement qui contient les composants A, B et C suivants :
A) une résine uréthane dans laquelle sont inclus des groupes amides d'acide, avec un rapport des liaisons uréthane aux liaisons amides d'acide compris dans la gamme de 9:1 à 1:9,
B) un ou plusieurs composés métalliques, sélectionnés dans le groupe constitué par les composés de Al, Mg, Ca, Zn, Ni, Co, Fe, Zr, Ti, V, W, Mn et Ce,
C) un composé du silicium.

6. Tôle d'acier Al/Zn à revêtement de surface exempt de chrome selon la revendication 5, dans laquelle on utilise, en tant que composant A, une résine uréthane dans laquelle sont inclus des groupes amides d'acide, avec un rapport des liaisons uréthane aux liaisons amides d'acide compris dans la gamme de 9:1 à 1:9, en tant que composant B, un composé du Zr et en tant que composant C, un ou plusieurs composés du silicium, choisis dans le groupe constitué par l'acide silicique, les sels d'acide silicique, le dioxyde de silicium colloïdal et les réactifs de couplage silane.

7. Tôle d'acier Al/Zn à revêtement de surface exempt de chrome selon la revendication 5 ou 6, dans laquelle on utilise, en tant que composant C, un réactif de couplage silane.

8. Tôle d'acier Al/Zn à revêtement de surface exempt de chrome selon la revendication 5, 6 ou 7, dans laquelle le composant B est choisi parmi les composés du Zr et le rapport pondéral résine/Zr, c'est-à-dire le rapport de la substance solide du composant A au Zr dans les composés du Zr du composant B est compris dans la gamme de 1 à 300.

9. Tôle d'acier Al/Zn à revêtement de surface exempt de chrome selon la revendication 7 ou 8, dans laquelle le rapport pondéral résine/Si, c'est-à-dire le rapport de la substance solide du composant A au Si dans le réactif de couplage silane est compris dans la gamme de 10 à 800.

10. Agent de revêtement de surface exempt de chrome pour tôle métallique, **caractérisé en qu'**il contient les composants A, B et C suivants :
A) une résine uréthane dans laquelle sont inclus des groupes amides d'acide, avec un rapport des liaisons uréthane aux liaisons amides d'acide compris dans la gamme de 9:1 à 1:9,
B) un ou plusieurs composés métalliques, sélectionnés dans le groupe constitué par les composés de Al, Mg, Ca, Zn, Ni, Co, Fe, Zr, Ti, V, W, Mn et Ce,
C) un composé du silicium.

11. Agent de revêtement de surface exempt de chrome pour tôle métallique selon la revendication 10, dans laquelle on utilise, en tant que composant A, une résine uréthane dans laquelle sont inclus des groupes amides d'acide, avec un rapport des liaisons uréthane aux liaisons amides d'acide compris dans la gamme de 9:1 à 1:9, en tant que composant B, un composé du Zr et en tant que composant C, un ou plusieurs composés du silicium, choisis dans le groupe constitué par l'acide silicique, les sels d'acide silicique, le dioxyde de silicium colloïdal et les réactifs de couplage silane.

12. Agent de revêtement de surface exempt de chrome pour tôle métallique selon la revendication 10 ou 11, dans laquelle on utilise, en tant que composant C, un réactif de couplage silane.

13. Agent de revêtement de surface exempt de chrome pour tôle métallique selon la revendication 10, 11 ou 12, dans laquelle le composant B est choisi parmi les composés du Zr et le rapport pondéral résine/Zr, c'est-à-dire le rapport de la substance solide du composant A au Zr dans les composés du Zr du composant B est compris dans la gamme de 1 à 300.

14. Agent de revêtement de surface exempt de chrome pour tôle métallique selon la revendication 12 ou 13, dans laquelle le rapport pondéral résine/Si, c'est-à-dire le rapport de la substance solide du composant A au Si dans le réactif de couplage silane est compris dans la gamme de 10 à 800.
